# EUROPÄISCHE PATENTSCHRIFT

(11) **EP 2 138 328 B1**
(45) Veröffentlichungstag und Bekanntmachung des Hinweises auf die Patenterteilung: **22.06.2011**
(21) Anmeldenummer: 09158569.5
(22) Anmeldetag: 23.04.2009
(51) Int. Cl.: B60C 11/03, B60C 11/12

(54) **Fahrzeugluftreifen**
Pneumatic tyres for a vehicle
Pneus de véhicule

(30) Priorität: 24.06.2008 DE 102008029658
(43) Veröffentlichungstag der Anmeldung: 30.12.2009
(73) Patentinhaber: Continental Reifen Deutschland GmbH, 30165 Hannover (DE)
(72) Erfinder: Lessmann, Kristina, 30827 Garbsen (DE)
(74) Vertreter: Finger, Karsten

(56) Entgegenhaltungen:
- EP-A- 1 090 781
- JP-A- 3 092 403
- JP-A- 3 182 814
- JP-A- 6 270 612

## Beschreibung

Die Erfindung betrifft einen Fahrzeugluftreifen für den Einsatz unter winterlichen Fahrbedingungen mit einem Laufstreifen, welcher durch Umfangsnuten, Quernuten und dergleichen in Profilelemente, insbesondere in Profilblöcke, gegliedert ist, wobei Profilelemente vorgesehen sind, welche jeweils zumindest einen, vorzugsweise jeweils eine Anzahl von zumindest im Wesentlichen in axialer Richtung verlaufenden Einschnitte(n) aufweisen, welcher Einschnitt unterschiedlich angehobene Endabschnitte und zwischen diesen einen tieferen Grundabschnitt aufweist, welcher mit den Endabschnitten über gegenüber der radialen Richtung geneigte Verbindungsflanken verbunden ist.

Es ist bekannt und üblich, die Profilelemente in Laufstreifen von Fahrzeugluftreifen, die für einen Einsatz unter winterlichen Fahrbedingungen vorgesehen sind, jeweils mit einer Vielzahl von Einschnitten zu versehen. Üblich und bekannt ist es ferner, diese Einschnitte in einer Breite von etwa 0,4 mm bis 0, 6 mm auszuführen und mit einem in Draufsicht geraden, wellenförmigen oder zick-zack-förmigen Verlauf zu versehen. Ein Laufstreifen mit Profilblöcken, mit zick-zack-förmig verlaufenden Einschnitten und in Kombination gerade und zick-zack-förmig verlaufende Abschnitte aufweisenden Einschnitten ist beispielsweise aus der DE-A-103 52 149 bekannt.

Es ist ferner üblich, die Endabschnitte von Einschnitten mit einer geringeren Tiefe auszuführen und die derart angehoben ausgeführten Einschnittabschnitte mit dem dazwischen verlaufenden Grundabschnitt über schräge Flanken, welche unter übereinstimmenden Winkeln zur radialen Richtung verlaufen, zu verbinden. Werden die angehobenen Endabschnitte ungleich hoch ausgeführt, tritt an jenem Endabschnitt, welcher mehr angehoben ist, durch den Schlupf beim Abrollen des Reifens eines höhere Belastung auf. Während sich der Einschnitt am anderen Endabschnitt mehr öffnen kann, ist er an diesem Endabschnitt mehr fixiert. Es entsteht ein Moment, das zu Rissen im Bereich der Einschnittanbindungen an die Profilblöcke führen kann. Die Belastung ist umso höher, je mehr Einschnitte der Laufstreifen aufweist, da eine höhere Anzahl von Einschnitten die Profilblocksteifigkeit und damit den Widerstand gegen Blockbewegungen reduziert. Eine möglichst hohe Anzahl von Einschnitten ist jedoch für die Winterperformance des Laufstreifens, beispielsweise die Schnee- und Iceperformance, wesentlich.

Ein solcher gattungsgemäßer Reifen ist beispielsweise aus der EP-A2-1 090 781 bekannt.

Der Erfindung liegt die Aufgabe zugrunde, diesen Zielkonflikt - Erhalt eines hohen Einschnittanzahl zur Aufrechterhaltung der Wintereigenschaften auf der einen Seite und eine gute Profilelementsteifigkeit zur Gewährleistung guter Trockenfahreigenschaften auf der anderen Seite - zufriedenstellend zu lösen. Es ist daher Aufgabe der Erfindung, einen Laufstreifen derart zu gestalten, dass bei einer großen Anzahl von Einschnitten die Trockenfahreigenschaften, insbesondere was Bremsen auf trockenen Fahrbahnen und den Trockenabrieb betrifft, verbessert sind.

Gelöst wird die gestellte Aufgabe erfindungsgemäß dadurch, dass die Verbindungsflanke zwischen dem einen geringeren Abstand zur Laufstreifenaußenseite aufweisenden Endabschnitt und dem Grundabschnitt unter einem größeren Winkel zur radialen Richtung verläuft als die Verbindungsflanke zwischen dem anderen Endabschnitt und dem Grundabschnitt, wobei der größere Winkel < 45° und der kleinere Winkel > 10°ist.

Insbesondere beträgt die Größe des größeren Flankenwinkels im Wesentlichen 4/3 der Größe des kleineren Flankenwinkels.

Ist ein erfindungsgemäß ausgeführter Laufstreifen im Bereich der Einschnitte auf das Niveau des höheren Endabschnittes abgerieben, dann verstärkt sich das Moment um den Schnittpunkt zwischen dem nicht mehr vorhandenen Endabschnitt und der weiterhin vorhandenen Flanke, da sich der Einschnitt an diesem Bereich nicht mehr bewegen kann. Der einseitig größere Flankenwinkel reduziert die Belastung, die in diesem Punkt bzw. an dieser Stelle einwirkt und die das Moment - hervorgerufen durch den Schlupferzeugt. Je größer der größere Flankenwinkel ist, desto größer muss auch der andere Flankenwinkel sein, Es bildet sich derart am Blockrand und in der Blocktiefe eine Stützstruktur, welche die Stabilität des Blocks im Untergrund verbessert. Für den Laufstreifenabrieb bedeutet das, dass ein ungleichmäßiger Abrieb eines Blockelementes - begrenzt durch die Einschnitt- und Blockkanten - reduziert wird. Darüber hinaus wird die Gefahr eines Bildens von Rissen an den Einschnittanbindungen herabgesetzt, da sich die Belastung durch das erwähnte Moment jetzt nicht mehr nur an einer Stelle auftritt.

Für das Bremsverhalten des Reifens auf trockenen Fahrbahnen und den Trockenabrieb ist es dabei von Vorteil, wenn der einen geringeren Abstand zur Laufstreifenaußenseite aufweisende Endabschnitt eine größere Längserstreckung aufweist als der zweite Endabschnitt, und wenn die Längserstreckung dieses Endabschnittes 15% bis 20% der Länge der Einschnitterstreckung beträgt, wobei der zweite Endabschnitt eine Längserstreckung aufweisen sollte, die zwischen 10% und 20% der Länge der Einschnitterstreckung beträgt.

Für die Reduktion der Belastung des Profilblockes mit zunehmendem Abrieb ist es günstig, wenn der Abstand des einen geringeren Abstand zur Laufstreifenaußenseite aufweisenden Endabschnittes des Einschnittes 20% bis 25% der Profiltiefe beträgt und wenn der Abstand des einen größeren Abstand zur Laufstreifenaußenseite aufweisenden Endabschnittes 30% bis 50% der Profiltiefe beträgt.

Weitere Merkmale, Vorteile und Einzelheiten der Erfindung werden anhand der Zeichnung, die Ausführungsbeispiele darstellt, näher beschrieben. Dabei zeigen
Fig. 1 eine Draufsicht auf einen Abschnitt einer Abwicklung eines erfindungsgemäßen Laufstreifens,
Fig.1a einen Schnitt entlang der Linie D-D der Fig.1,
Fig. 1b einen Schnitt entlang der Linie K-K der Fig. 1,
Fig. 1c einen Schnitt entlang der Linie E-E der Fig. 1,
Fig. 1d einen Schnitt entlang der Linie F-F der Fig. 1,
Fig. 1e einen Schnitt entlang der Linie G-G der Fig. 1,
Fig. 1f einen Schnitt entlang der Linie H-H der Fig. 1,
Fig. 1g einen Schnitt entlang der Linie L-L der Fig. 1,
Fig. 2 eine Schnittdarstellung eines Einschnittes
Fig. 3 eine Draufsicht auf einen Einschnitt aus Fig. 1

Der in Fig. dargestellte Laufstreifen wird über eine Breite B, welche der Breite des Reifens in der Bodenaufstandsfläche beim Abrollen entspricht, betrachtet. Der Laufstreifen 1 ist in axialer Richtung in zwei strukturell unterschiedliche Abschnitte, einen Außenabschnitt A und einen Innenabschnitt I, geteilt und daher ein sogenannter "asymmetrischer" Laufstreifen. Der Außenabschnitt A umfasst jenen Bereich des Fahrzeugluftreifens, welcher bei am Fahrzeug montierten Reifen an der Fahrzeugaußenseite liegt. Der funktionale Schwerpunkt des Außenabschnittes A liegt bei den Handlingeigenschaften des Reifens auf trockenen Fahrbahnen, die funktionalen Schwerpunkte des Innenabschnittes I sind Winterperformance und Aquaplaningeigenschaften.

Bei der gezeigten Ausführungsvariante ist die Grenze zwischen dem Außenabschnitt A und dem Innenabschnitt 1 durch eine Umfangsnut 2 gebildet, welche gegenüber der Äquatorebene Z-Z in Richtung der Schulter im Außenabschnitt A versetzt ist. Der Laufstreifenaußenabschnitt nimmt daher weniger als 50 % der Laufstreifenbreite ein, insbesondere erstreckt sich der Laufstreifenaußenabschnitt A über 30% bis 45% der Laufstreifenbreite B. Die Profilpositive im Außenabschnitt A sind durch Blöcke 3a einer Schulterblockreihe 3 und Blöcke 4a einer dieser benachbart verlaufenden Blockreihe 4 gebildet. Zwischen der Schulterblockreihe 3 und der Blockreihe 4 verläuft eine weitere, in Umfangrichtung umlaufende Umfangsnut 5. Die beiden Umfangsnuten 2 und 5 sind im Wesentlichen in der Umfangsrichtung gerade umlaufende Nuten, welche bei den gezeigten Ausführungsvarianten unterschiedliche Breiten aufweisen, wobei die schulterseitig gelegene Umfangsnut 5 die schmälere ist.

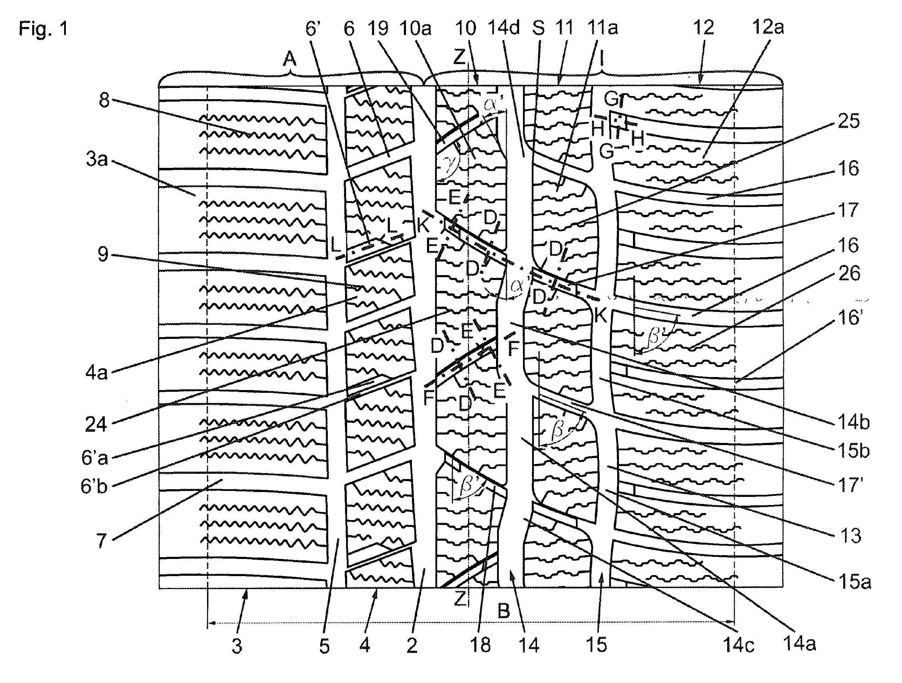

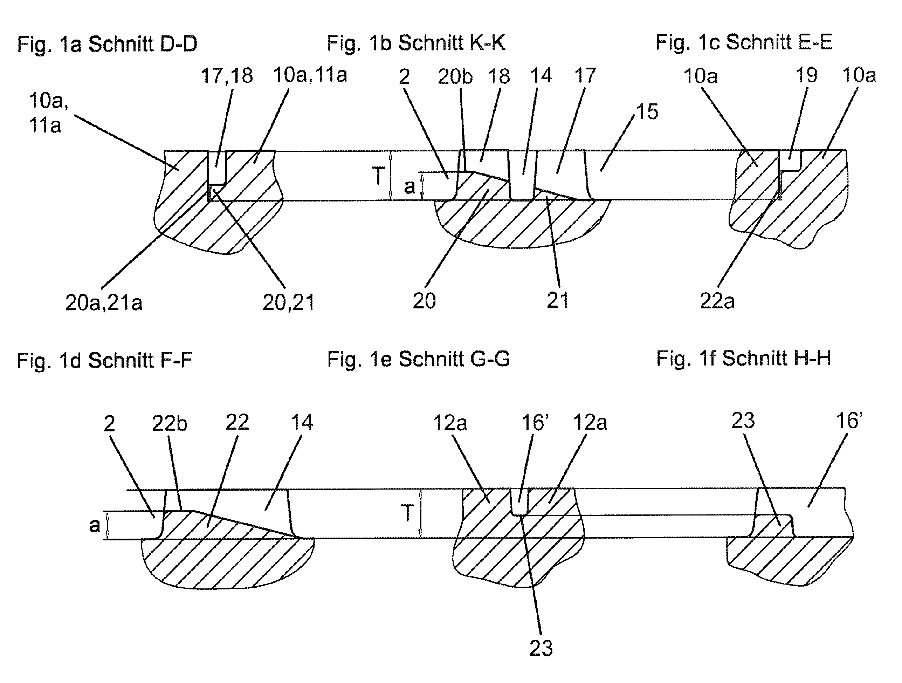

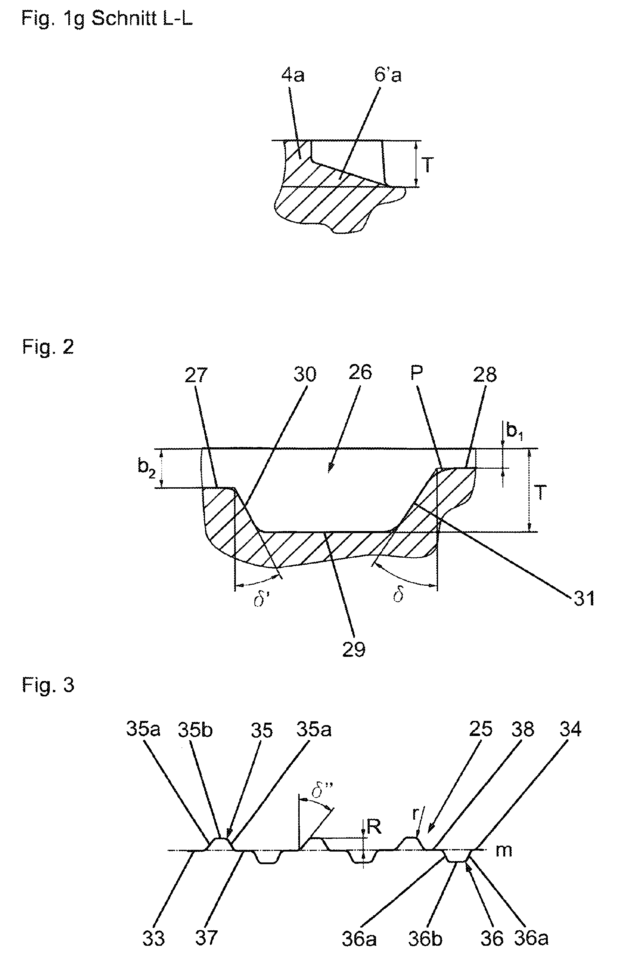

Der Laufstreifen 1 ist in Folge der Anordnung der Quernuten im Innen- und Außenabschnitt I, A laufrichtungsgebunden ausgeführt. Im Außenabschnitt A sind zwischen den einzelnen Blöcken 4a der Blockreihe 4 abwechselnd Quernuten 6, 6'vorgesehen sind. Die Quernuten 6, 6' verlaufen unter einem im Wesentlichen gleichgroßen Winkel α zur Umfangsrichtung, welcher in der Größenordnung von 45° bis 80° beträgt. Bei der gezeigten Ausführung beträgt α etwa 70°. Die Quernuten 6 verlaufen gerade und weisen eine konstante Breite in der Größenordnung von 2 mm bis 3 mm auf. Die abwechselnd mit den Quernuten 6 vorgesehenen Quernuten 6' weisen an die Umfangsnut 5 anschließend und über etwa zwei Drittel ihrer Länge rampenförmige Anhebungen 6'a auf, die jeweils im Profilblock 4a eine Einbuchtung erzeugen. Wie der Schnitt in Fig. 1g zeigt, weisen die rampenförmigen Anhebungen 6'a ihre größte radiale Höhe von 50% bis 70% der Profiltiefe T an ihren laufstreifeninnenseitigen Enden auf, ihre Höhe verringert sich kontinuierlich in Richtung Umfangsnut 5 etwa bis auf das Niveau des Nutgrundes der Nut 5. Einschnitte 6'b einer Breite von 1 bis 2 mm verlaufen über die gesamte Erstreckung der Quernuten 6' und sind insbesondere in der Profiltiefe T ausgeführt. Die Schulterblöcke 3 sind voneinander durch Quernuten 7 getrennt, die im Wesentlichen in Laufstreifenquerrichtung verlaufen und einen leicht bogenförmigen Verlauf aufweisen. Den Quernuten 7 ist abwechselnd eine Quernut 6 und eine Quernut 6' aus der Blockreihe 4 zugeordnet. Auf dieser Weise sind die Blöcke 3a und 4a, jeweils gemeinsam mit einer benachbarten Quernut 7 und 6 beziehungsweise 6' in Umfangsrichtung aufeinander folgende Profilabschnitte, sogenannte Pitches, gegliedert, wobei die Pitches in unterschiedlichen Umfangslängen, beispielsweise zwei unterschiedlichen Umfangslängen, vorgesehen sind. Die unterschiedlichen Umfangslängen sind aus Fig. 1 ersichtlich, die Blöcke 3a und 4a weisen unterschiedliche Umfangserstreckungen auf. Diese Maßnahme dient bekannterweise zur Optimierung bzw. Verringerung des Abrollgeräusches. Die Gesamtpitchanzahl über den Laufstreifenumfang ist im Laufstreifenaußenabschnitt A geringer als im Laufstreifeninnenabschnitt 1, auf den später näher eingegangen wird. Im Laufstreifenaußenabschnitt A beträgt die Gesamtpitchanzahl insbesondere zwischen 70 und 80.

Sämtliche Profilblöcke 3a, 4a sind jeweils mit einer Anzahl von im Wesentlichen in Laufstreifenquerrichtung verlaufenden Einschnitten 8, 9 versehen. Die Einschnitte 8, 9 weisen eine Breite von 0,4 mm bis 0,6 mm und eine Tiefe von mindestens 1,5 mm auf. Bei der dargestellten Ausführungsform sind die Einschnitte 8, 9 in Draufsicht zickzackförmig ausgeführt.

Im Laufstreifeninnenabschnitt I verlaufen über den Reifenumfang drei Blockreihen 10, 11 und 12, die voneinander durch weitere Umfangsnuten 14, 15 getrennt sind. Die Schulterblockreihe 12 besteht aus Einzelblöcken 12a und Quernuten 16, 16', die der Schulterblockreihe 12 benachbarte mittlere Blockreihe 11 setzt sich aus Blöcken 11a und Quernuten 17, 17' zusammen, wobei jeweils zwei Blöcken 12a aus der Schulterblockreihe 12 ein Block 11a aus der mittleren Blockreihe 11 zugeordnet ist. Jede Quernut 16 aus der Schulterblockreihe 12 findet ihre Fortsetzung in einer der abwechselnd vorgesehenen Quernuten 17, 17' der mittleren Blockreihe 11. Die Quernuten 16, 16'und 17, 17' weisen jeweils einen leicht bogenförmigen Verlauf auf, derart, dass die Quernuten 17, 17' unter einem Winkel β in der Größenordnung von 45° bis 80° zur Umfangsrichtung und die Quernuten 16, 16' unter einem Winkel β' zur Umfangsrichtung verlaufen, wobei β' geringfügig größer ist als der Winkel β und maximal 85° beträgt. Die Neigung der Quernuten 17, 17' und 16, 16' gegenüber der Umfangsrichtung ist gegensinnig zur Neigung der Quernuten 6 und 6', die im Laufstreifenaußenabschnitt A verlaufen.

Die dritte, entlang des Reifenäquators Z-Z verlaufende Blockreihe 10 weist ebenfalls halb so viele Blöcke 10a auf wie die Schulterblockreihe 12. Jede Quernut 17 aus der mittleren Blockreihe 11 findet eine Fortsetzung als Quernut 18 in der zentralen Blockreihe 10, sodass die Quernuten 18 gemeinsam mit Quernuten 17 und 16 einen kontinuierlichen, leicht bogenförmigen Verlauf aufweisen. Der Winkel β", den die Quernuten 18 mit der Reifenumfangsrichtung einschließen, ist geringfügig kleiner als der Winkel β und beträgt bis zu 85°. Zwischen benachbarten Quernuten 18 befinden sich jeweils zwei Blöcke 10a, die voneinander durch eine weitere Quernut 19 getrennt sind, welche bezüglich der Umfangsrichtung gegensinnig zu den Quernuten 18 geneigt ist. Der Neigungswinkel γ der Quernuten 19 beträgt zwischen 95° und 135°.

Im Innenabschnitt I orientiert sich die maßgebliche Pitchanzahl an der Anzahl der Pitches beziehungsweise der Anzahl der Blöcke 12a in der Schulterblockreihe 12. Das Verhältnis der Pitchanzahl im Außenabschnitt A zur Pitchanzahl im Innenabschnitt I beträgt zwischen 1:1,25 bis 1:1,3. Gemäß einer bevorzugten Ausführungsform der Erfindung ist dabei die größte Umfangslänge eines Blocks 12a aus der Schulterblockeihel2 im Innenabschnitt I gleich groß wie die kleinste Umfangslänge eines Blockes 3a aus der Schulterblockreihe 3 des Außenabschnittes A. Diese Maßnahme trägt zu einer gleichmäßigen Druckverteilung in der Bodenaufstandsfläche bei.

Die breiteste Umfangsnut des Laufstreifens 1 ist die Umfangsnut 14 zwischen der zentralen Blockreihe 10 und der mittleren Blockreihe 11 des Innenabschnittes I, deren Breite in der Größenordnung von 9 mm bis 12 mm beträgt. Die Umfangsnut 14 weist in Umfangsrichtung verlaufende gerade Nutabschnitte 14a, 14b auf, die in axialer Richtung abwechselnd in Richtung der einen und der anderen Reifenschulter und gegeneinander geringfügig, um mindestens ein Fünftel und höchstens bis zur Hälfte der Breite der Umfangsnut 14, versetzt sind. Die Abschnitte 14a und 14b verlaufen dabei im Wesentlichen entlang der in Umfangsrichtung orientierten Blockflanken der Blöcke 11a der mittleren Blockreihe 11. Die Umfangsabschnitte 14a, 14b der Umfangsnut 14 sind durch zur Umfangsrichtung unter einem Winkel α' von bis zu 40° geneigte Verbindungsabschnitte 14c, 14d miteinander verbunden. Die in einer Breite von etwa 6 mm bis 8 mm ausgeführte Umfangsnut 15 weist einen leicht wellenförmigen Verlauf mit abwechselnd aufeinander folgenden Abschnitten 15a und 15b auf, welche analog zu den Abschnitten 14a, 14b der Umfangsnut 14 in axialer Richtung gegeneinander um bis zur Hälfte ihrer Breite versetzt sind. Die spezielle Ausgestaltung der beiden Umfangsnuten 14 und 15 ist mit dem Vorteil verbunden, dass die Umfangsnuten 14, 15 mit einer vergleichsweise großen Negativfläche versehen werden können, was für die Aquaplaningperformance beziehungsweise das Wasserdrainagevermögen des Laufstreifen 1 besonders günstig ist. Gleichzeitig wird durch die versetzten Abschnitte 14a, 14b beziehungsweise 15a, 15b in Umfangsrichtung der sogenannte "Look Through" verringert, wodurch sich der Kontaktbereich zwischen dem Laufstreifen und der Fahrbahnoberfläche vergrößert, was die Iceperformance des Laufstreifens verbessert, da durch den Versatz der Abschnitte 14a, 14b, und 15a, 15b der Druck in der Bodenaufstandsfläche gleichmäßiger verteilt wird. Jeder Verbindungsabschnitt 14d ist in Richtung einer Quernut 17' geneigt und mündet in diese. Die Spitzen S der Blöcke 11a der mittleren Blockreihe 11 werden somit von Wasser in den Verbindungsabschnitten 14d derart angeströmt, dass das Wasser über die Quernuten 17 und die an diese anschließenden Quernuten 16 in der Schulterblockreihe 12 nach außen transportiert wird. Darüber hinaus sorgen die ab der Laufstreifenmitte kontinuierliche Drainagekanäle bildenden Quernuten 18, 17 und 16 für eine Wasserableitung ab der Laufstreifenmitte in Richtung Innenschulter und hier nach außen.

Die im Laufstreifenmittelbereich verlaufenden Umfangsnuten 2 und 14 sind breiter als die bei den Schulterbereichen verlaufenden Umfangsnuten 5 und 15. Das Verhältnis der Breite der Umfangsnut 2 zur Breite der Umfangsnut 5 und das Verhältnis der Breite der Umfangsnut 14 zur Breite der Umfangsnut 15 beträgt jeweils zwischen 1:1,25 bis 1:1,4. Durch diese Maßnahme wird dem höheren Staudruck in der Laufstreifenmitte Rechnung getragen und ebenfalls das Wasserdrainagevermögen des Laufstreifens verbessert.

Fig. 1a und 1b zeigen Schnitte durch die miteinander fluchtenden Quernuten 17 und 18, Fig. 1a einen Querschnitt durch die Quernuten 17 und 18 und Fig. 1b einen Längsschnitt durch die Quernuten 17, 18. Die Quernuten 17 und 18 weisen jeweils eine rampenförmige Anhebung 20, 21 auf, welche jeweils an einen Block 10a beziehungsweise 11a aus der jeweiligen Blockreihe 10 beziehungsweise 11 angebunden sind, wobei zwischen den Anhebungen 20, 21 und den zweiten Blöcken 10a beziehungsweise 11 a ein schmaler etwa 0,5 mm bis 1 mm breiter Einschnitt 20a, 21a ausgebildet ist, welcher in radialer Richtung bis auf die vorgesehene Profiltiefe reicht. Der in Fig. 1b gezeigte mittige Schnitt durch die rampenförmigen Anhebungen 20 und 21 zeigt, dass die Anhebung 20 vorerst bei der Umfangsnut 2 über einen kurzen Abschnitt ein parallel zur Profilaußenseite verlaufendes Plateau 20b bildet, welches sich vom Nutgrund der Umfangsnut 2 aus betrachtet in einem Abstand a von 50% bis 70% der Profiltiefe T befindet. Von diesem Plateau 20b ausgehend verringert sich die Höhe der rampenförmigen Anhebungen 20, 21 kontinuierlich bis auf den Grund der Quernut 17, wobei die rampenförmige Anhebung 21 eine Fortsetzung der rampenförmigen Anhebung 20 darstellt, derart, als wäre die dazwischen befindliche Umfangsnut 14 nicht vorhanden. Die rampenförmige Anhebung 21 endet am Grund der Quernut 17 in einem Abstand von der Umfangsnut 15 von etwa einem Viertel der Erstreckungslänge der Quernut 17.

Die Schnittdarstellungen in Fig. 1c und Fig. 1d zeigen die in den Quernuten 19 der zentralen Blockreihe 10 vorgesehenen rampenförmige Anhebungen 22. Der in Fig. 1c gezeigte Querschnitt durch eine Quernut 19 zeigt, dass die rampenförmige Anhebung 22 an den einen Block 10a angebunden ist und vom zweiten Block 10a durch einen schmalen etwa 0,5 mm bis 1 mm breiten Einschnitt 22a, dessen Tiefe der Profiltiefe T entspricht, getrennt ist. Bei der Umfangsnut 2 weist die rampenförmige Anhebung 22 vorerst ein Plateau 22b auf, welches sich über etwa ein Viertel bis ein Fünftel der Längserstreckung der Quernut 19 erstreckt. Die vom Nutgrund der Umfangsnut 2 gemessene Höhe a des Plateaus 22b beträgt zwischen 50% und 70% der Profiltiefe T. Zwischen dem Plateau 22b und der Umfangsnut 14 wird die Höhe der rampenförmigen Anhebung 22 kontinuierlich geringer, wobei die rampenförmige Anhebung 22 am Nutgrund der Quernut 19 endet beziehungsweise ausläuft.

Fig. 1e und Fig. 1f zeigen Schnitte durch eine der Quernuten 16' in der Schulterblockreihe 12. In den Quernuten 16' befindet sich über einen kurzen Abschnitt und unmittelbar der Umfangsnut 15 benachbart jeweils eine Anhebung 23, welche an beide benachbarte Blöcke 12a angebunden ist und eine konstante Höhe in der Größenordnung von 30% bis 60% der Profiltiefe T aufweist. Diese Anhebung 23 erstreckt sich über eine Länge von 6 mm bis 8 mm.

In sämtlichen Blöcken 10a, 11a und 12a der Blockreihen 10, 11, 12 des Laufstreifeninnenabschnittes I ist jeweils eine Anzahl von zumindest im Wesentlichen in Laufstreifenquerrichtung verlaufenden Einschnitten 24, 25 und 26 vorgesehen. Die Einschnitte 24, 25 und 26 weisen in Draufsicht einen besonderen Verlauf auf, der als eine von einer Treppenform überlagerte Wellenform betrachtet werden kann. Auf die Besonderheiten der Einschnitte 24, 25 und 26 wird weiter unten näher eingegangenen.

Zumindest in den Einschnitten 26 der Schulterblöcke 12a ist ein spezielles Einschnittanhebungskonzept vorgesehen, welches im Folgenden anhand der Fig. 2 näher erläutert wird. Fig. 2 zeigt einen radialen "Schnitt" durch einen Einschnitt 26, wobei der Einfachheit halber die Wellen- und Treppenstruktur des Einschnittes 26 nicht wiedergegeben ist, sodass quasi die Projektion des Einschnittes auf seine Schnittebene gezeigt ist. Das Einschnittanhebungskonzept lässt sich grundsätzlich auch bei Einschnitten realisieren, die gerade verlaufen oder eine herkömmliche Zickzack- oder Wellenform aufweisen. Der Einschnitt 26 weist angehobene Endabschnitte 27, 28 und zwischen diesen einen vorzugsweise auf Profiltiefe T ausgeführten Grundabschnitt 29 auf. Der Grundabschnitt 29 erstreckt sich über 40% bis 70% der Einschnittserstreckung, welche die Länge des Einschnittes 26 in seiner Projektion auf seine radiale Schnittebene in Erstreckungsrichtung ist. Der angehobene Abschnitt 27 verläuft über 10% bis 20% und der angehobene Abschnitt 28 über 15% bis 20% der Einschnitterstreckung. Die Abschnitte 27, 28 befinden sich auf bestimmten, insbesondere konstanten Höhen, wobei sich der Abschnitt 28 in einem Abstand b₁ von 20% bis 25% der Profiltiefe T von der Profilaußenfläche und der Abschnitt 27 in einem Abstand b₂ von 30% bis 50% der Profiltiefe T von der Profilaußenfläche befindet. Zwischen den Abschnitten 27, 28 und dem Grundabschnitt 29 verlaufen zur radialen Richtung geneigte Verbindungsflanken 30, 31. Die Verbindungsflanke 31 zwischen dem Abschnitt 28 und dem Grundabschnitt 29 verläuft unter einem Winkel δ zur radialer Richtung, welcher kleiner gleich 45° ist, die Verbindungsflanke 30 zwischen dem Abschnitt 27 und dem Grundabschnitt 29 verläuft unter einem Winkel δ' zur radialen Richtung, welcher größer gleich 10° beträgt. Der Winkel δ ist jedenfalls größer als der Winkel δ', wobei im Wesentlichen δ = δ' x 4/3 gilt. Ist nun der Laufstreifen 1 um das Ausmaß b₁ abgerieben, dann verstärkt sich das Moment um den in Fig. 2 eingezeichnete Stelle P an der Schnittstelle zwischen dem Abschnitt 28 und der Flanke 31, da sich der Einschnitt 26 an diesem Bereich nicht mehr bewegen kann. Der größere Winkel δ reduziert die Belastung, die in P einwirkt und die durch das Moment - hervorgerufen durch den Schlupf beim Abrollen - erzeugt wird. Je größer δ ist, umso größer muss auch δ' sein, wodurch sich auch der Abstand zwischen der Blockkante und dem Anfang des Einschnittgrundes vergrößert. Der größere Winkel δ ermöglicht eine Beibehaltung einer guten Winterperformance, da sich die Flanke 31 über eine größere Länge erstreckt als die Flanke 30. Ein ungleichmäßiges Abreiben der einzelnen Blöcke wird somit reduziert. Darüber hinaus wird die Gefahr des Bildens von Einrissen am Übergang der Flanken 30, 31 in den angehobenen Abschnitt 27, 28 herabgesetzt, da sich die Belastung durch das erwähnte Moment jetzt nicht mehr auf den gleichen Punkt (Punkt P) auswirkt. Derart ausgeführte Einschnitte 26 können in beliebigen Profilelementen bzw. Profilblöcken eines Laufstreifens vorgesehen sein.

Die spezielle Treppen-/Wellenform der Einschnitte 24, 25 und 26 wird im Folgenden anhand der Fig. 3, die beispielhaft einem Einschnitt 25 in Draufsicht zeigt, näher erläutert. Die punktierte Linie kennzeichnet die Mittelachse m beziehungsweise die Mittellinie des Einschnittes 25. Der Einschnitt 25 weist zwei entlang der Mittelachse m verlaufende kurze Endabschnitte 33, 34 auf. Vom Endabschnitt 33 ausgehend ist ein Wellenberg 35 auf der einen Seite der Mittelachse m ausgebildet, vom Endabschnitt 34 ein Wellenberg 36 auf die andere Seite der Mittelachse m. Die beiden Flanken 35a, 36a der Wellenberge 35, 36 verlaufenden gegensinnig zueinander und jeweils unter einem Winkel δ", welcher zwischen 25° und 35°, insbesondere etwa 30°, beträgt, zu einer Normalen auf die Mittelachse m. Die Bereiche der Wellenberge 35, 36 mit der größten Amplitude R sind jeweils von einem gerade und parallel zur Mittelachse m verlaufenden Abschnitt 35b und 36b gebildet, dessen Länge das 1,0- bis 3,0-Fache der Amplitude R, die maximal 2mm aufweist, beträgt. An die Wellenberge 35, 36 schließt jeweils ein gerader, entlang der Mittelachse m verlaufender Abschnitt 37, 38 an, dessen Länge mindestens der Größe der Amplitude R entspricht. Zwischen den einzelnen Abschnitten 33, 34, 35b, 36b, 37, 38 und den jeweiligen Flanken 35a, 36a sind Übergangsbereiche in Form von Rundungen vorgesehen, wobei der Rundungsradius r maximal der Größe der Amplitude R entspricht, sein kleinster Wert beträgt dem 0,25-Fachen von R. Abweichend von der gezeigten Ausführung kann die Mittelachse m eine leicht gebogen verlaufende Mittellinie sein. Ein erfindungsgemäßer Einschnitt 25 wird derart angeführt, dass er abwechselnd Wellenberge 35, 36, zumindest einen Wellenberg 35 und einen Wellenberg 36, aufweist.

Erfindungsgemäß ausgeführte Einschnitte weisen vorzugsweise mehrere aufeinander folgende Wellenberge 35, 36, wie beschrieben, auf, bei der in Fig. 3 gezeigten Ausführung sind jeweils drei Wellenberge 35 und drei Wellenberge 36 vorgesehen. In Folge der speziellen geschwungenen Ausgestaltung weist ein erfindungsgemäßer Einschnitt 25 eine wesentlich höhere Einschnittlänge und damit auch eine wesentlich höhere Griffkantenlänge auf als herkömmlich ausgeführte, beispielsweise zickzackförmig verlaufende Einschnitte. In den geraden Abschnitten 35b, 36b, 37, 38 kann sich der Einschnitt 25 leichter öffnen als beispielsweise ein wellenförmiger oder zickzackförmiger Einschnitt. In diese Abschnitte 35b, 36b, 37, 38 kann Schnee gut eindringen, wodurch die Schnee- Schnee-Reibung verbessert wird.

Darüber hinaus weisen erfindungsgemäß ausgeführte Einschnitte 25 hohe Queranteile für eine gute Schneeseitenführung auf. Die Einschnitte 25 werden bevorzugt mit einer Erstreckung im Wesentlichen in Laufstreifenquerrichtung angeordnet, um die Schneetraktion des Laufstreifens zu verbessern. Die höhere Quersteifigkeit der mit solchen Einschnitten 25 versehenen Profilblöcke wirkt sich zudem positiv auf das Trockenhandling aus. Gemäß Fig. 3 ausgeführte Einschnitte können ebenfalls in beliebig ausgeführten Laufstreifen und in beliebigen Profilelementen vorgesehen sein.

### Bezugsziffernliste

- 1: Laufstreifen
- 2: Umfangsnut
- 3: Schulterblockreihe
- 3a: Block
- 4: Blockreihe
- 4a: Block
- 4b: Einbuchtung
- 5: Umfangsnut
- 6, 6': Quernuten
- 6'a: rampenförmige Anhebung
- 7: Quernuten
- 8: Einschnitt
- 9: Einschnitt
- 10: Blockreihen
- 10a: Blöcke
- 11: Blockreihen
- 11a: Blöcke
- 12: Blockreihen
- 12a: Blöcke
- 14: Umfangsnuten
- 14a: Umfangsabschnitte
- 14b: Umfangsabschnitte
- 14c: Verbindungsabschnitt
- 14d: Verbindungsabschnitt
- 15: Umfangsnuten
- 15a: Abschnitte
- 15b: Abschnitte
- 16, 16': Quernut
- 17, 17': Quernut
- 18: Quernut
- 19: Quernut
- 20: Anhebung
- 20a: Einschnitt
- 20b: Plateau
- 21: Anhebung
- 21a: Einschnitt
- 22: Anhebung
- 22a: Einschnitt
- 22b: Plateau
- 23: Anhebung
- 24: Einschnitte
- 25: Einschnitte
- 26: Einschnitte
- 27: Einschnittabschnitt
- 28: Einschnittabschnitt
- 29: Grundabschnitt
- 30: Verbindungsflanke
- 31: Verbindungsflanke
- 33: Endabschnitte
- 34: Endabschnitte
- 35: Wellenberg
- 35a: Flanken
- 35b: Abschnitt
- 36: Wellenberg
- 36a: Flanken
- 36b: Abschnitt
- 37: Abschnitt
- 38: Abschnitt

- α: Winkel
- α': Winkel
- β: Winkel
- γ: Winkel
- δ: Winkel
- δ': Winkel
- δ": Winkel

- A: Außenabschnitt
- 1: Innenabschnitt

## Patentansprüche

1. Fahrzeugluftreifen für den Einsatz unter winterlichen Fahrbedingungen mit einem Laufstreifen (1), welcher durch Umfangsnuten (2, 5, 14, 15), Quernuten (6, 6', 7, 16, 16', 17, 17', 18, 19) und dergleichen in Profilelemente, insbesondere in Profilblöcke (3a, 4a, 10a, 11 a, 12a) gegliedert ist, wobei Profilelemente (10a, 11a, 12a) vorgesehen sind, welche jeweils zumindest einen, vorzugsweise jeweils eine Anzahl von zumindest im Wesentlichen in axialer Richtung verlaufenden Einschnitte(n) (24, 25, 26) aufweisen, welcher Einschnitt (24, 25, 26) unterschiedlich angehobene Endabschnitte (27, 28) und zwischen diesen einen tieferen Grundabschnitt (29) aufweist, welcher mit den Endabschnitten (27, 28) über gegenüber der radialen Richtung geneigte Verbindungsflanken (30, 31) verbunden ist,
**dadurch gekennzeichnet,**
**dass** die Verbindungsflanke (31) zwischen dem einen geringeren Abstand (b₁) zur Laufstreifenaußenseite aufweisenden Endabschnitt (28) und dem Grundabschnitt (29) unter einem größeren Winkel (δ) zur radialen Richtung verläuft als die Verbindungsflanke (30) zwischen dem anderen Endabschnitt (27) und dem Grundabschnitt (29), wobei der größere Winkel (δ) < 45° und der kleinere Winkel (δ') > 10°ist.

2. Fahrzeugluftreifen nach Anspruch 1, **dadurch gekennzeichnet, dass** die Größe des größeren Flankenwinkels (δ) im Wesentlichen 4/3 der Größe des kleineren Flankenwinkels (δ') beträgt.

3. Fahrzeugluftreifen nach Anspruch 1 oder 2, **dadurch gekennzeichnet, dass** der einen geringeren Abstand (b₁) zur Laufstreifenaußenseite aufweisende Endabschnitt (28) eine größere Längserstreckung aufweist als der zweite Endabschnitt (27).

4. Fahrzeugluftreifen nach Anspruch 3, **dadurch gekennzeichnet, dass** der einen geringeren Abstand (b₁) zur Laufstreifenaußenseite aufweisende Endabschnitt (28) eine Längserstreckung aufweist, die 15% bis 20% der Länge der Einschnitterstreckung beträgt.

5. Fahrzeugluftreifen nach Anspruch 3, **dadurch gekennzeichnet, dass** der einen größeren Abstand (b₂) zur Laufstreifenaußenseite aufweisende Endabschnitt (27) eine Längserstreckung aufweist, die 10% bis 20% der Länge der Einschnitterstreckung beträgt.

6. Fahrzeugluftreifen nach einem der Ansprüche 1 bis 5, **dadurch gekennzeichnet, dass** der Abstand (b₁) des einen geringeren Abstand (b₁) zur Laufstreifenaußenseite aufweisenden Endabschnittes (28) 20% bis 25% der Profiltiefe (T) beträgt.

7. Fahrzeugluftreifen nach einem der Ansprüche 1 bis 5, **dadurch gekennzeichnet, dass** der Abstand (b₂) des einen größeren Abstand (b₂) zur Laufstreifenaußenseite aufweisenden Endabschnittes (27) 30% bis 50% der Profiltiefe (T) beträgt.

## Claims

1. Pneumatic vehicle tyre for use under winter driving conditions, with a tread rubber (1), which is divided by circumferential grooves (2, 5, 14, 15), transverse grooves (6, 6', 7, 16, 16', 17, 17', 18, 19) and the like into profile elements, in particular into profile blocks (3a, 4a, 10a, 11a, 12a), wherein profile elements (10a, 11a, 12a) which each have at least one, preferably a number of at least substantially axially extending sipe(s) (24, 25, 26) are provided, which sipe (24, 25, 26) has differently raised end portions (27, 28) and between these a lower main portion (29), which is joined to the end portions (27, 28) by way of joining flanks (30, 31) that are inclined with respect to the radial direction, **characterized in that** the joining flank (31) between the end portion (28) that is at a smaller distance (b₁) from the outer side of the tread rubber and the main portion (29) extends at a greater angle (δ) to the radial direction than the joining flank (30) between the other end portion (27) and the main portion (29), the greater angle (δ) being < 45° and the smaller angle (δ') being > 10°.

2. Pneumatic vehicle tyre according to Claim 1, **characterized in that** the size of the greater flank angle (δ) is substantially 4/3 the size of the smaller flank angle (δ').

3. Pneumatic vehicle tyre according to Claim 1 or 2, **characterized in that** the end portion (28) that is at a smaller distance (b₁) from the outer side of the tread rubber has a greater longitudinal extent than the second end portion (27).

4. Pneumatic vehicle tyre according to Claim 3, **characterized in that** the end portion (28) that is at a smaller distance (b₁) from the outer side of the tread rubber has a longitudinal extent which is 15% to 20% of the length of the extent of the sipe(s).

5. Pneumatic vehicle tyre according to Claim 3, **characterized in that** the end portion (27) that is at a greater distance (b₂) from the outer side of the tread rubber has a longitudinal extent which is 10% to 20% of the length of the extent of the sipe(s).

6. Pneumatic vehicle tyre according to one of Claims 1 to 5, **characterized in that** the distance (b₁) of the end portion (28) that is at a smaller distance (b₁) from the outer side of the tread rubber is 20% to 25% of the profile depth (T).

7. Pneumatic vehicle tyre according to one of Claims 1 to 5, **characterized in that** the distance (b₂) of the end portion (27) that is at a greater distance (b₂) from the outer side of the tread rubber is 30% to 50% of the profile depth (T).

## Revendications

1. Bandage pneumatique pour roue de véhicule destiné à être utilisé dans les conditions hivernales de roulage, et présentant une bande de roulement (1) divisée par des rainures périphériques (2, 5, 14, 15), des rainures transversales (6, 6', 7, 16, 16', 17, 17', 18, 19) et similaires en éléments profilés et en particulier en blocs profilés (3a, 4a, 10a, 11a, 12a),
des éléments profilés (10a, 11a, 12a) étant prévus et présentent chacun au moins une et de préférence plusieurs entailles (24, 25, 26) qui s'étendent au moins essentiellement dans la direction axiale,
ces entailles (24, 25, 26) présentant des parties d'extrémité (27, 28) relevées différemment et entre ces dernières une partie de fond (29) plus profonde qui est reliée aux parties d'extrémité (27, 28) par des flancs de liaison (30, 31) inclinés par rapport à la direction radiale,
**caractérisé en ce que**
le flanc de liaison (31) s'étend entre la partie d'extrémité (28) qui présente la plus petite distance (b₁) par rapport au côté extérieur de la bande de roulement et la partie de fond (29) en formant par rapport à la direction radiale un angle (δ) plus grand que le flanc de liaison (30) entre l'autre partie d'extrémité (27) et la partie de fond (29), le plus grand angle (δ) étant < 45° et le plus petit angle (δ') étant > 10°.

2. Bandage pneumatique pour roue de véhicule selon la revendication 1, **caractérisé en ce que** la valeur du plus grand angle de flanc (δ) représente essentiellement 4/3 de la valeur du plus petit angle de flanc (δ').

3. Bandage pneumatique pour roue de véhicule selon la revendication 1 ou 2, **caractérisé en ce que** la partie d'extrémité (28) qui présente une plus petite distance (b₁) par rapport au côté extérieur de la bande de roulement a une plus grande extension longitudinale que la deuxième partie d'extrémité (27).

4. Bandage pneumatique pour roue de véhicule selon la revendication 3, **caractérisé en ce que** la partie d'extrémité (28) qui présente une plus petite distance (b₁) par rapport au côté extérieur de la bande de roulement a une extension longitudinale qui vaut de 15 % à 2 0 % de la longueur de l'extension de l'entaille.

5. Bandage pneumatique pour roue de véhicule selon la revendication 3, **caractérisé en ce que** la partie d'extrémité (27) qui présente la plus grande distance (b₂) par rapport au côté extérieur de la bande de roulement a une extension longitudinale qui vaut de 10 % à 20 % de la longueur de l'extension de l'entaille.

6. Bandage pneumatique pour roue de véhicule selon l'une des revendications 1 à 5, **caractérisé en ce que** la distance (b₁) de la partie d'extrémité (28) qui présente une plus petite distance (b₁) par rapport au côté extérieur de la bande de roulement vaut de 20 % à 25 % de la profondeur (T) du profilé.

7. Bandage pneumatique pour roue de véhicule selon l'une des revendications 1 à 5, **caractérisé en ce que** la distance (b₂) de la partie d'extrémité (27) qui présente une plus grande distance (b₂) par rapport au côté extérieur de la bande de roulement vaut de 30 % à 50 % de la profondeur (T) du profilé.
